# EUROPÄISCHE PATENTSCHRIFT

(11) **EP 1 223 835 B1**
(45) Veröffentlichungstag und Bekanntmachung des Hinweises auf die Patenterteilung: **16.07.2003**
(21) Anmeldenummer: 00977408.4
(22) Anmeldetag: 21.09.2000
(51) Int. Cl.: A47C 1/032, B64D 11/06, B60N 2/02, B60N 2/24

(54) **SITZ**
SEAT
SIEGE

(30) Priorität: 26.10.1999 DE 19951625
(43) Veröffentlichungstag der Anmeldung: 24.07.2002
(73) Patentinhaber: Girsberger Holding AG, 4922 Bützberg (CH)
(72) Erfinder: AUBERT, Thierry, CH-8003 Zürich (CH); ANGST, Philipp, CH-5000 Aarau (CH); RICKLI, Michael, CH-3608 Thun (CH)
(74) Vertreter: Maucher, Wolfgang, Dipl.-Ing.
(86) Internationale Anmeldenummer: EP0009234
(87) Internationale Veröffentlichungsnummer: WO01030203

(56) Entgegenhaltungen:
- EP-A- 0 865 960
- WO-A-00/29249
- DE-A- 3 822 877
- US-A- 3 572 829
- US-A- 5 058 954

## Beschreibung

Die Erfindung betrifft einen Sitz mit einer Sitzauflage, die eine Sitzfläche sowie eine damit verschwenkbar verbundene Rückenlehne hat, welche Sitzfläche und Rückenlehne jeweils drehbar und längsverschieblich in Zwangsführungen an einem Sitzträger verstellbar und festlegbar gehalten sind, wobei die Rückenneigung der Rückenlehne bei festgelegtem Sitzwinkel zwischen Rückenlehne und Sitzfläche durch Verschwenken der Sitzauflage relativ zum Sitzträger verstellbar ist, und wobei die Sitzneigung der Sitzfläche bei in Sitzlängsrichtung festgelegtem Anlenkpunkt der Sitzfläche am Sitzträger durch Verschwenken der Sitzfläche relativ zur Rückenlehne verstellbar ist.

Sitze, bei denen die Sitzfläche sowie die damit verschwenkbar verbundene Rückenlehne zum Lageverstellen der Sitzauflage an einem Sitzträger verstellbar und festlegbar gehalten sind, sind beispielsweise als Bürostühle oder auch als Autositze in den verschiedensten Ausführungen bekannt.

So werden beispielsweise im Rücksitzbereich Autositze mit einer sogenannten Schlepplehne verwendet. Bei diesen vorbekannten Autositzen kann die Sitzfläche mittels eines motorischen Stellantriebes nach vorne bewegt werden. Da die Sitzfläche über ein Schwenkgelenk mit einer Rückenlehne verbunden ist, zieht das Sitzteil die Rückenlehne nach, die in einer Zwangsführung im oberen Teil der Lehnen verschieblich geführt ist.

Die Sitzneigung dieser vorbekannten Sitze läßt sich über ein Kreissegment verstellen, welches die Sitzfläche separat im vorderen freien Sitzbereich der Sitzfläche mittels eines weiteren Stellantriebes anheben und absenken kann. Da bei diesem vorbekannten Sitz die Rückenneigung nur mittelbar durch eine Längsbewegung der Sitzfläche verändert werden kann, ist für eine größere Veränderung der Rückenneigung ein vergleichsweise langer Verstellweg erforderlich.

Aus der DE 38 22 877 A1 ist bereits ein Sitz der eingangs erwähnten Art bekannt, der als Flugzeugsitz dient. Um bei der Änderung der Schräglage der Rückenlehnen den Sitzbereich des dahinter befindlichen Fluggastes nicht zu beeinträchtigen, sind Sitzschale und Rückenlehne gleichzeitig in einer kulissenartigen Gleitführung verschiebbar. Da die Sitzschale und die Rückenlehne auch verschwenkbar miteinander verbunden sind, kann bei einer Sitzverstellung erreicht werden, daß die Sitzfläche ihre waagrechte Lage beibehält, sich lediglich nach vorne verschiebt und etwas anhebt, während die Rückenlehne eine größere Schräglage einnimmt, ohne den hinteren Mitreisenden zu stören.

Eine weitere Sitzkonstruktion, bei welcher die Sitzfläche und die mit ihr verschwenkbar verbundene Rückenlehne an einem Sitzträger verstellbar und festlegbar gehalten sind, ist aus der EP 0 865 960 A1 der Anmelderin bekannt. Bei dieser als Fahrzeugsitz dienenden Sitzkonstruktion ist die Rückenlehne mittels einer während einer Heckkollision crashbedingten Krafteinwirkung durch den Benutzer des Sitzes von einer vorgegebenen Ausgangsstellung in eine Sicherheitsstellung bewegbar. Dazu weist das Trägerteil eine oberhalb der Sitzfläche angeordnete Abstützung für die Rückenlehne mit wirksamem Hebelarm beabstandet zur Krafteinleitungsstelle des Beckenbereiches in die Rückenlehne auf. Das Sitzteil ist mit einer von der Rückenlehne nach vorne wegweisenden, schräg nach oben orientierten Führung verbunden, so daß bei einer Frontalkollision das Sitzteil von der ursprünglich gewählten Ausgangsstellung in eine demgegenüber erhöhte Sicherheitsstellung verschoben wird.

Bei diesen vorbekannten Sitzen ist die Verstellbarkeit zwischen der Sitzfläche und der Rückenlehne vor allem aus Gründen der Platzersparnis oder der Fahrzeugsicherheit vorgesehen, während der Sitz- und der Bedienungskomfort für den Benutzer nicht das vorrangige Ziel dieser Sitzkonstruktionen ist.

Es besteht daher die Aufgabe, einen Sitz der eingangs erwähnten Art mit einem vergleichsweise großen Verstellbereich zu schaffen, der dem Benutzer einen größtmöglichen Sitz- und Bedienungskomfort bietet.

Eine erfindungsgemäße Lösung dieser Aufgabe besteht bei dem Sitz der eingangs erwähnten Art darin, daß zur Sitzneigungsverstellung ein Schwenkgelenk mit integriertem Stellantrieb zwischen Sitzfläche und Rückenlehne vorgesehen ist.

Nach einer weiteren erfindungsgemäßen Lösung ist vorgesehen, daß die Rückenlehne zur Sitzneigungsverstellung über einen Linear-Stellantrieb mit dem Sitzträger verbunden ist, der als Hubantrieb ausgebildet ist und mit seinem einen Endbereich am Anlenkpunkt der Rückenlehne in der ihr zugeordneten Zwangsführung angreift.

Bei dem erfindungsgemäßen Stuhl wird eine manuelle Stellbewegung zur Sitzneigungsverstellung vermieden; statt dessen ist ein Stellantrieb vorgesehen, der eine Sitzneigungsverstellung auch unter beengten Platzverhältnissen erlaubt.

Dabei erfolgt die Verstellung der Sitz- und Rückenlehnenneigung nicht durch die herkömmliche direkte Verstellung der Rückenlehne und der Sitzfläche, sondern vielmehr läßt sich die Sitzneigung durch das eigentliche Verstellen des von der Sitzfläche und der Rückenlehne eingeschlossenen Sitzwinkels und die Rückenneigung durch das Verschieben der Sitzfläche in Sitz-Längsrichtung und Verschwenken der Sitzauflage relativ zum Sitzträger auf das individuell gewünschte Maß einstellen. Im Vergleich beispielsweise zu vorbekannten Autositzen läßt sich mit dem erfindungsgemäßen Sitz bei gleichem Verstellweg eine wesentlich größere Rückenneigung erreichen.

Der erfindungsgemäße Sitz kann sowohl als Bürostuhl oder dergleichen Sitzmöbel oder als Autositz, Flugzeugsitz oder dergleichen Fahrzeugsitz ausgebildet sein.

Die Sitzfläche und die Rückenlehne sind jeweils drehbar und längsverschieblich in Zwangsführungen am Sitzträger gehalten. Die Sitzfläche und die Rückenlehne können dazu über Dreh-Schub-Führungen am Sitzträger gehalten sein. Diese Dreh-Schub-Führungen erlauben bei einer Rückenneigungsverstellung ein gleichzeitiges Verfahren und Drehen der Sitzfläche und der Rückenlehne am Sitzträger. Bei einer Sitzneigungsverstellung wirkt die der Sitzfläche zugeordnete Dreh-Schub-Führung lediglich als Drehgelenk, während die mit der Sitzfläche über ein Schwenkgelenk verbundene Rückenlehne in ihrer Dreh-Schubführung verfahren und sich gegenüber dem Sitzträger drehen kann.

Somit kann die Rückenlehne bei in Längsrichtung festgelegtem Anlenkpunkt am Sitzträger infolge einer Änderung des Sitzwinkels entlang der der Rückenlehne zugeordneten Zwangsführung verfahren und dadurch eine Sitzneigungsänderung bewirken. Wird demgegenüber der zwischen Sitzfläche und Rückenlehne eingeschlossene Sitzwinkel festgelegt und der Anlenkpunkt der Sitzfläche in ihrer Zwangsführung verfahren, folgt die Rückenlehne in ihrer Zwangsführung und neigt sich um den eigenen Anlenkpunkt in der Zwangsführung der Rückenlehne, derart, daß die gesamte Sitzauflage relativ zum Sitzträger verschwenkt wird.

Bevorzugt wird eine Ausführungsform, bei der zur Rückenneigungsverstellung und zur Sitzneigungsverstellung jeweils ein Stellantrieb vorgesehen ist.

Der erfindungsgemäße Sitz kann ohne weiteres als Bürostuhl oder dergleichen Sitzmöbel ausgestaltet sein. Bevorzugt wird jedoch eine Ausführungsform, bei welcher der Sitz als Autositz oder Flugzeugsitz ausgebildet ist. Ein beispielsweise als Autositz ausgebildeter Sitz kann dabei als Vorder- oder Rücksitz ausgestaltet sein.

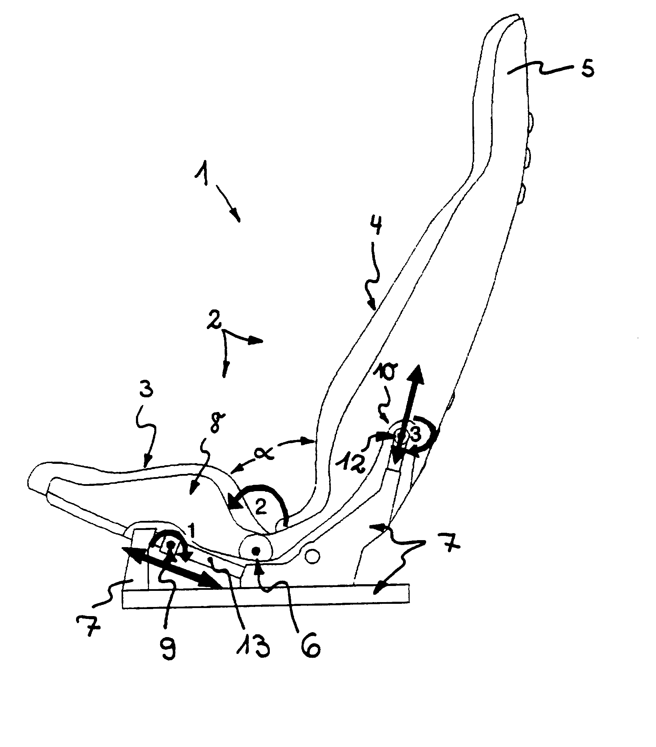

Weitere Merkmale der Erfindung ergeben sich aus der folgenden Beschreibung eines erfindungsgemäßen Ausführungsbeispieles in Verbindung mit den Ansprüchen sowie der Zeichnung.

In der einzigen Figur ist ein Autositz 1 dargestellt, der hier als Fahrer oder Beifahrersitz ausgebildet ist.

Der Sitz 1 weist eine Sitzauflage 2 auf, die eine Sitzfläche 3 und eine Rückenlehne 4 mit integrierter Kopfstütze 5 hat. Die Sitzfläche 3 und die Rückenlehne 4, die jeweils auch mehrere Segmente aufweisen können, sind an ihren einander zugewandten Seiten über ein frei angeordnetes Schwenkgelenk 6 verschwenkbar miteinander verbunden. Zum Verstellen der Sitzauflage 2 sind die Sitzfläche 3 und die Rückenlehne 4 an einem Sitzträger 7 verstellbar und festlegbar gehalten. Dieser Sitzträger 7 ist hier rahmenartig ausgebildet und beidseits der Sitzauflage 2 angeordnet.

Wie in der einzigen Figur erkennbar ist, sind die Sitzfläche 3 und die Rückenlehne 4 jeweils drehbar und in Sitz-Längsrichtung verfahrbar am Sitzträger 7 gehalten. Die Sitzfläche 3 und die Rückenlehne 4 sind dazu über Dreh-Schub-Führungen 8, 10 mit dem Sitzträger 7 verbunden.
Die Rückenneigung der Rückenlehne 4 ist bei festgelegtem Sitzwinkel α zwischen Rückenlehne 4 und Sitzfläche 3 allein durch Verschwenken der Sitzauflage 2 relativ zum Sitzträger 7 verstellbar; dabei verfahren die Sitzfläche 3 und die Rückenlehne 4 der Sitzauflage 2 in ihren Zwangsführungen 8, 10 in Sitz-Längsrichtung, ohne daß der Sitzwinkel α verändert wird. Die Sitzneigung der Sitzfläche 3 kann bei in Sitz-Längsrichtung festgelegtem Anlenkpunkt 9 der Sitzfläche 3 am Sitzträger 7 durch Verschwenken der Sitzfläche 3 relativ zur Rückenlehne 4 verstellt werden. Dabei läßt sich mit dem Sitz 1 auch bei vergleichsweise kurzem Verstellweg eine große Rückenneigungsveränderung erreichen.

Während die Rückenlehne 4 dazu in ihrer Zwangsführung 10 verschoben wird, dreht sich die Sitzfläche 3 unter Veränderung des zwischen Sitzfläche 3 und Rückenlehne 4 eingeschlossenen Sitzwinkels α um ihren in Sitz-Längsrichtung festgelegten Anlenkpunkt 9 am Sitzträger 7.

Die Sitzneigungsverstellung kann durch einen Stellantrieb erfolgen, der in das Schwenkgelenk 6 zwischen Sitzfläche 3 und Rückenlehne 4 integriert ist. Bei dem hier dargestellten Sitz 1 erfolgt die Sitzneigungsverstellung jedoch durch einen Linear-Stellantrieb, der als Hubantrieb 11 ausgebildet ist und gleichzeitig als Zwangsführung dient. Dieser hier im Sitzträger 7 gehaltene Stellantrieb greift mit seinem einen Endbereich am Anlenkpunkt 12 der Rückenlehne 4 an und bildet somit unabhängig von seiner Hubstellung jeweils den gegenüber dem Boden oder dergleichen Standfläche höchsten Teilbereich des Sitzträgers 7.

Zur Rückenneigungsverstellung ist demgegenüber ein Zahnstangenantrieb vorgesehen, dessen hier im wesentlichen runde Zahnstange 13 gleichzeitig auch als Zwangsführung für die darüber liegende Sitzfläche 3 dient.

Der Sitz 1 ist als freistehender Fahrer- oder Beifahrersitz ausgestaltet, dessen Sitzträger 7 fest mit dem Fahrzeugboden verbunden ist. Der Sitz 1 kann aber beispielsweise auch als Rücksitz ausgebildet sein. Bei einem solchen als Fahrzeug-Rücksitz ausgebildeten Sitz kann beispielsweise ein Teilbereich der Fahrzeugrückwand als Sitzträger dienen, die mit dem Linear-Stellantrieb oder dergleichen Zwangsführung für die Rückenlehne fest verbunden ist.

Der hier dargestellte Sitz 1 läßt sich ohne weiteres mit einer automatischen Sitzverstellung kombinieren, wie sie in der WO-A-00 29249 beschrieben ist. Diese automatische Sitzverstellung erlaubt die körpersynchrone Verstellung der Stellantriebe über zumindest einen Körperpositionsmelder.

## Patentansprüche

1. Sitz (1) mit einer Sitzauflage (2), die eine Sitzfläche (3) sowie eine damit verschwenkbar verbundene Rückenlehne (4) hat, welche Sitzfläche (3) und Rückenlehne (4) jeweils drehbar und längsverschieblich in Zwangsführungen (8,10) an einem Sitzträger (7) verstellbar und festlegbar gehalten sind, wobei die Rückenneigung der Rückenlehne (4) bei festgelegtem Sitzwinkel (α) zwischen Rückenlehne (4) und Sitzfläche (3) durch Verschwenken der Sitzauflage (2) relativ zum Sitzträger (7) verstellbar ist, und wobei die Sitzneigung der Sitzfläche (3) bei in Sitzlängsrichtung festgelegtem Anlenkpunkt (9) der Sitzfläche (3) am Sitzträger (7) durch Verschwenken der Sitzfläche (3) relativ zur Rückenlehne (4) verstellbar ist, **dadurch gekennzeichnet, daß** zur Sitzneigungsverstellung ein Schwenkgelenk (6) mit integriertem Stellantrieb zwischen Sitzfläche (3) und Rückenlehne (4) vorgesehen ist.

2. Sitz nach dem Oberbegriff von Anspruch 1, **dadurch gekennzeichnet, daß** die Rückenlehne (4) zur Sitzneigungsverstellung über einen Linear-Stellantrieb mit dem Sitzträger (7) verbunden ist, der als Hubantrieb (11) ausgebildet ist und mit seinem einen Endbereich am Anlenkpunkt (12) der Rückenlehne (4) in der ihr zugeordneten Zwangsführung (10) angreift.

3. Sitz nach Anspruch 1 oder 2, **dadurch gekennzeichnet, daß** zur Rückenneigungsverstellung und zur Sitzneigungsverstellung jeweils ein Stellantrieb vorgesehen ist.

4. Sitz nach einem der Ansprüche 1 bis 3, **dadurch gekennzeichnet, daß** der Sitz (1) als Autositz oder Flugzeugsitz ausgebildet ist.

5. Sitz nach einem der Ansprüche 1 bis 4, **dadurch gekennzeichnet, daß** der Sitz (1) als Vorder- oder Rücksitz ausgebildet ist.

## Claims

1. Seat (1), having a seat mounting (2) which has a seat area (3) and a back-rest (4) connected pivotably thereto, which seat area (3) and back-rest (4) are each retained in positive guide means (8, 10) on a seat support (7) in a rotatable and longitudinally displaceable manner and in an adjustable and securable manner, the inclination of the back-rest (4) being adjustable when the seat angle (α) between back-rest (4) and seat area (3) is fixed by pivoting the seat mounting (2) relative to the seat support (7), and the inclination of the seat area (3) being adjustable when the articulation point (9) of the seat area (3) with the seat support (7) is fixed in the longitudinal direction of the seat by pivoting the seat area (3) relative to the back-rest (4), **characterised in that** a pivot joint (6) is provided with an incorporated adjustment drive between seat area (3) and back-rest (4) to adjust the inclination of the seat.

2. Seat according to the preamble of claim 1, **characterised in that** the back-rest (4) is connected to the seat support (7) via a linear adjustment drive to adjust the inclination of the seat, said support being in the form of a lifting drive (11) and co-operating, by its one end region, with the articulation point (12) of the back-rest (4) in the positive guide means (10) associated with said back-rest.

3. Seat according to claim 1 or 2, **characterised in that** a respective adjustment drive is provided to adjust the inclination of the back and to adjust the inclination of the seat.

4. Seat according to one of claims 1 to 3, **characterised in that** the seat (1) is in the form of a car seat or an aeroplane seat.

5. Seat according to one of claims 1 to 4, **characterised in that** the seat (1) is in the form of a front seat or a rear seat.

## Revendications

1. Siège (1) avec un appui de siège (2) qui comporte une surface de siège (3) ainsi qu'un dossier (4) relié à celle-ci de manière basculante, laquelle surface de siège (3) et lequel dossier (4), individuellement mobiles autour d'un axe et déplaçables longitudinalement dans des guidages forcés (8, 10) étant maintenus de manière réglable et fixable sur un support de siège (7), l'inclinaison du dossier (4) étant, après détermination de l'angle de siège (α) entre le dossier (4) et la surface de siège (3) réglable par le basculement de l'appui de siège (2) par rapport au support de siège (7), et l'inclinaison de la surface de siège (3) étant après détermination du point d'articulation (9) de la surface de siège (3) dans le sens longitudinal du siège sur le support de siège (7) réglable par le basculement de la surface de siège (3) par rapport au dossier (4), **caractérisé en ce qu'**une articulation pivotante (6) avec mécanisme de commande intégré est prévue entre la surface de siège (3) et le dossier (4) pour le réglage de l'inclinaison du siège.

2. Siège selon le préambule de la revendication 1, **caractérisé en ce que** le dossier (4) est relié au support de siège (7) par un mécanisme de commande linéaire pour le réglage de l'inclinaison du siège, qui est conçu comme un mécanisme de commande de levage (11) et qui agit, dans le guidage forcé (10) qui lui est associé, par l'une de ses zones terminales au niveau du point d'articulation (12) du dossier (4).

3. Siège selon la revendication 1 ou 2, **caractérisé en ce qu'**un mécanisme de commande est respectivement prévu pour le réglage de l'inclinaison du dossier et pour le réglage de l'inclinaison du siège.

4. Siège selon l'une quelconque des revendications 1 à 3, **caractérisé en ce que** le siège (1) est conçu comme un siège d'automobile ou un siège d'avion.

5. Siège selon l'une quelconque des revendications 1 à 4, **caractérisé en ce que** le siège (1) est conçu comme siège avant ou siège arrière.
